# EUROPÄISCHE PATENTSCHRIFT

(11) **EP 4 412 482 B1**
(45) Veröffentlichungstag und Bekanntmachung des Hinweises auf die Patenterteilung: **11.02.2026**
(21) Anmeldenummer: 22786820.5
(22) Anmeldetag: 28.09.2022
(51) Int. Cl.: A42B 3/10, A42B 3/12, A42B 3/28

(54) **KOPFSCHUTZPOLSTER**
HEAD GUARD PAD
TAMPON DE PROTECTION DE TÊTE

(30) Priorität: 04.10.2021 DE 102021125701; 04.10.2021 DE 102021125697
(43) Veröffentlichungstag der Anmeldung: 14.08.2024
(73) Patentinhaber: ODM GmbH, 67319 Wattenheim (DE)
(72) Erfinder: KÜHN, Christopher, 67319 Wattenheim (DE)
(74) Vertreter: STT Sozietät Thews & Thews
(86) Internationale Anmeldenummer: PCT/EP2022/077049
(87) Internationale Veröffentlichungsnummer: WO 2023/057288

(56) Entgegenhaltungen:
- WO-A1-2008/149127
- US-A1- 2002 068 152
- US-A1- 2006 260 026
- US-A1- 2018 160 761
- US-A1- 2018 242 665

## Beschreibung

Die Erfindung bezieht sich auf ein Kopfschutzpolster zum Einlegen in einen Helm oder eine Helmschale und weist einen Grundkörper aus Polstermaterial sowie eine Hülle auf, die den Grundkörper zumindest teilweise umgibt.

Es ist bereits ein Kopfschutzpolster zum Einlegen in einen Helm oder eine Helmschale allgemein bekannt, wobei das Kopfschutzpolster einen Grundkörper aus Schaumstoff aufweist, der von einer Hülle aus textilem Stoff umgeben ist.

Die US 2018/0242665 A1 beschreibt ein Textil mit Kühlmedium in Form von Kapseln. Dabei ist eine textile Trägerschicht vorgesehen mit einer Beschichtung aus Kühlmedium, so dass das Textil zwei-schichtig ist, die Trägerschicht und die Kühlmedium-Schicht. Alternativ ist beschrieben, dass das Kühlmedium in die textile Trägerschicht integriert ist.

Die US 2006/0260026 A1 beschreibt eine mehrlagige Prallschutzanordnung, die ergänzend zur Prallschutzschicht eine Innenschicht und eine angrenzende innere Abstandsschicht aufweist.

Der Erfindung liegt die Aufgabe zugrunde, Kopfschutzpolster zum Einlegen in eine Helmschale derart auszubilden und anzuordnen, dass eine vorteilhafte KühlWirkung erreicht wird.

Gelöst wird die Aufgabe erfindungsgemäß dadurch, dass die Hülle eine Außenlage aus textilem Stoff und mindestens eine Innenlage aufweist, wobei die Außenlage als Kühlschicht ausgebildet ist und ein in die Außenlage integriertes Kühlmedium aufweist, wobei eine Abstandsschicht vorgesehen ist, die zwischen der Innenlage und der Außenlage angeordnet ist. Bei dem Kühlmedium handelt es sich um ein sogenanntes pcm (phase change material), das Körperwärme aufnehmen kann, wobei es zumindest teilweise den Aggregatzustand von fest nach flüssig wechselt. Damit gewährleistet ist ein Temperaturausgleich zwischen der inneren Stoffschicht und der Kopfhaut. Hierdurch wird ein größerer Tragekomfort erreicht. Die als Kühlschicht ausgebildete Außenlage liegt unmittelbar am Kopf an und sorgt für eine entsprechende Kühlwirkung.

Die Abstandsschicht gewährleistet bzw. unterstützt die Kühlwirkung der Kühlschicht. Die Abstandsschicht weist eine Dicke von 4,5 mm bis 7 mm oder von 5,5 mm bis 6 mm auf. Durch die Abstandsschicht und das damit einhergehende Luftpolster wird die Kühlwirkung der Außenlage verbessert. Zudem werden das Abtrocknen der Außenlage und damit auch die Schweißaufnahme verbessert.

Vorteilhaft kann es hierzu auch sein, wenn die Innenlage aus textilem Stoff gebildet ist. Die jeweilige Lage kann vorteilhafterweise als Gewebelage mit entsprechenden Webstrukturen der Gewebefasern ausgebildet sein. Je nach verwendetem Material weist ein Gewebe vorteilhafte physikalische Eigenschaften auf. Es ist beispielsweise fester bzw. widerstandsfähiger. Ein ungewebtes Material weist unter Umständen eine geringere Dichte auf und wäre somit leichter.

Ferner kann es vorteilhaft sein, wenn als Kühlmedium Paraffin vorgesehen ist. Das Paraffin liegt stabilisiert vor mit einem definierten Schmelzpunkt von etwa 30 °C. Im Fall einer Gewebeschicht ist das Paraffin in die Gewebeschicht integriert oder durch die Gewebeschicht aufgenommen. Das Paraffin kann in Form von Mikrokapseln in die Außenlage integriert sein. Das Paraffin ändert bei Wärmeeintrag den Aggregatzustand von fest zu flüssig und nimmt dabei überschüssige Wärme vom Kopf auf.

Dabei kann es vorteilhaft sein, wenn die Abstandsschicht unmittelbar an die Außenlage angrenzt. Damit ist eine Unterstützung der Kühlwirkung der Kühlschicht gewährleistet.

Von besonderer Bedeutung kann für die vorliegende Erfindung sein, wenn die Abstandsschicht mit der Außenlage, und/oder dass die Abstandsschicht mit der Innenlage verwebt ist. Damit ist ein stabiler Aufbau gewährleistet.

Im Zusammenhang mit der erfindungsgemäßen Ausbildung und Anordnung kann es von Vorteil sein, wenn die Abstandsschicht aus einer Vielzahl von parallel zueinander oder in einem spitzen Winkel α zueinander angeordneten Stäbchen oder Härchen gebildet ist, die quer zur Außenlage ausgerichtet sind.Außerdem kann es vorteilhaft sein, wenn eine Flächendichte von 2.500 oder zwischen 2.000 und 1.0000 Stäbchen pro cm² vorgesehen ist. Das Gewährleistet Stabilität trotz Hinterlüftung.

Ferner kann es vorteilhaft sein, wenn die Abstandsschicht eine Dicke von mindestens 5 mm aufweist. Die Dicke wird im unbelasteten Zustand ermittelt.

Dabei kann es von Vorteil sein, wenn die Abstandsschicht eine spezifisches Gewicht von 200 g/m² oder zwischen 150 g/m² und 300 g/m² aufweist.

Die Kopfschutzpolster finden zudem noch Anwendung bei schusssicheren Westen, schwerer Schutzbekleidung, Stoßschutzelementen, Motorradbekleidung und sonstigen Stoßschutz-Kopfbedeckungen. In leichteren Qualitäten auch als Innenfutter für Freizeit-Jacken und -Hosen sowie Handschuhe.

Zudem kann es vorteilhaft sein, wenn der Grundkörper aus Schaumstoff und/oder aus einem Gel gebildet ist. Im Fall von Gel ist der Grundkörper als Gelkissen ausgebildet mit einer Außenhülle, in der das Gel aufgenommen ist. Die Hülle kann dabei mit dem Schaumstoff bzw. dem Gelkissen verklebt sein.

Weitere Vorteile und Einzelheiten der Erfindung sind in den Patentansprüchen und in der Beschreibung erläutert und in den Figuren dargestellt. Es zeigt:
- Figur 1: eine perspektivische Ansicht eines Kopfschutzpolsters;
- Figur 2a: eine Schnittdarstellung eines Kopfschutzpolsters mit Grundkörper;
- Figur 2b: eine Schnittdarstellung der Hülle des Kopfschutzpolsters;
- Figur 3a: eine Detailansicht der Hülle gemäß Figur 2b;
- Figur 3b: eine Detailansicht eines relativen Ausführungsbeispiels;
- Figur 4: eine Prinzipdarstellung eines Helms bzw. Helmschalen mit Kopfschutzpolster.

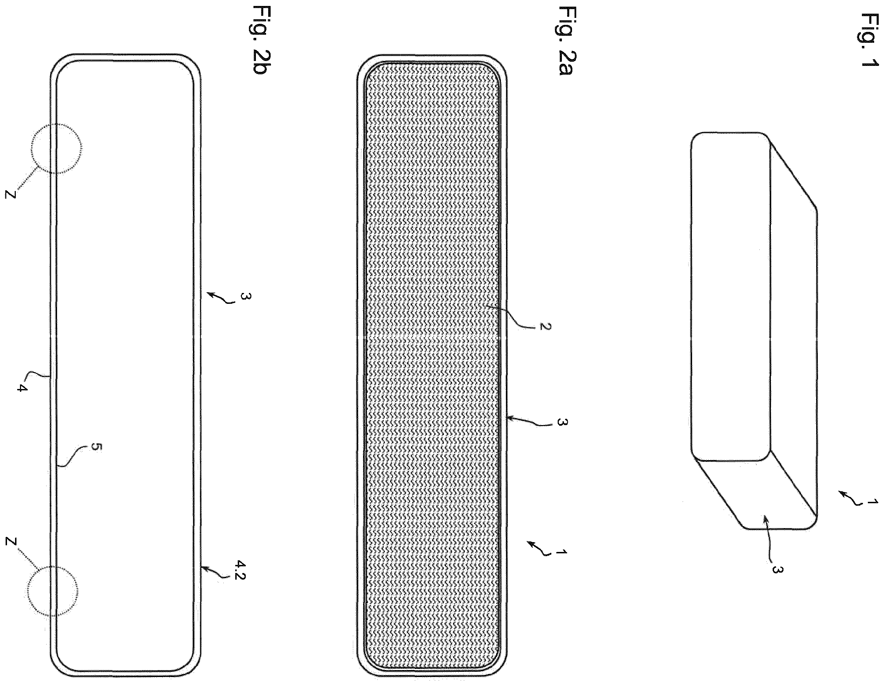

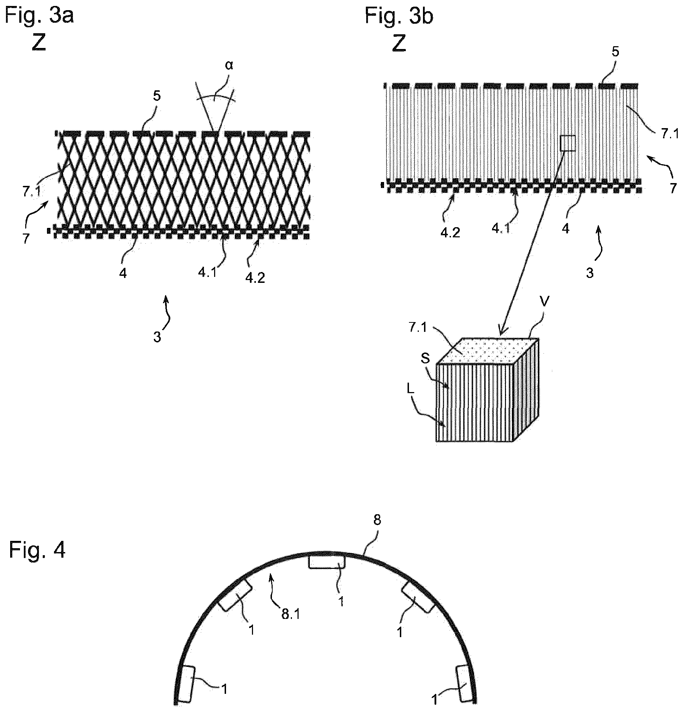

Das in Figur 1 dargestellte Kopfschutzpolster 1 ist kissenförmig ausgebildet und weist eine Hülle 3 auf. Das so ausgebildete Kopfschutzpolster 1 wird über nicht dargestellte Haltemittel wie Klebeband oder Kleber an der Innenseite 8.1 eines Helms oder Helmschale 8 gemäß Figur 4 befestigt.

Nach Figur 2a weist das Kopfschutzpolster 1 einen innenliegenden Grundkörper 2 auf, der in der Regel aus einem Schaumstoff gebildet ist. Der Grundkörper 2 ist von der Hülle 3 allseitig umgeben.

Nach Figur 2b weist die Hülle 3 eine Außenlage 4 sowie eine Innenlage 5 auf. Die Außenlage 4 liegt dabei an einem zu schützenden Kopf an. Die Außenlage 4 weist zudem ein Kühlmedium 4.1 auf, welches in Form von Mikrokapseln in der Außenlage 4 integriert ist. Die Hülle 3 ist gemäß der folgenden Detailansichten Z gemäß Figur 3a bzw. Figur 3b dreilagig aufgebaut. Die Außenlage 4 weist zudem eine Außenfläche 4.2 auf.

Nach Figur 3a, 3b weist die Hülle 3 die genannte Außenlage 4 sowie die Innenlage 5 und darüber hinaus eine zwischen der Außenlage 4 und der Innenlage 5 angeordnete Abstandsschicht 7 auf. Die Hülle 3 hat eine Dicke von ca. 3 bis 5 mm und ein spezifisches Flächengewicht von 450 bis 700 g/m². Während die Außenlage 4 sowie die Innenlage 5 aus einem textilen Stoff gebildet sind, weist die Abstandsschicht 7 eine Stäbchen- bzw. Härchenstruktur auf. Nach Ausführungsbeispiel Figur 3a sind dabei die Härchen bzw. Stäbchen 7.1 in einem Winkel α zueinander angeordnet. Dieser Winkel α ist ein spitzer Winkel von etwa 40°. Nach Ausführungsbeispiel Figur 3b sind die Stäbchen bzw. Härchen 7.1 parallel zueinander ausgerichtet und zugleich normal zur angrenzenden Außenlage 4 bzw. Innenlage 5 ausgerichtet. Die Abstandsschicht 7 ist sowohl mit der Außenlage 4 als auch mit der Innenlage 5 mechanisch verbunden, wie beispielsweise durch Einweben.

Die Abstandsschicht 7 weist wie nach Figur 3b im Prinzip dargestellt ein Volumen V auf, das sich zusammensetzt aus dem Volumen S der darin befindlichen Stäbchen 7.1 sowie dem verbleibendem Luftvolumen L. Das Verhältnis L/G von Luftvolumen L zu Gesamtvolumen G liegt mindestens bei 0,9 oder mindestens bei 0,95. Dabei ist eine Flächendichte von 1.500 bis 3.000 Stäbchen 7.1 pro cm² vorgesehen.

Wie nach Figur 3a, 3b dargestellt weist die Außenlage 4 die Außenfläche 4.2 mit einer grauen Farbe auf. Zudem weist die Außenlage 4 ein Kühlmedium 4.1 auf, welches in Form von Mikrokapseln vorliegt und in die Außenlage 4 integriert ist.

Gemäß Ausführungsbeispiel Figur 4 sind mehrere Kopfschutzpolster 1 über genannte Verbindungsmittel wie Klettverschlüsse an einer Innenseite 8.1 eines Helms 8 bzw. einer Helmschale befestigt, so dass die Kopfschutzpolster 1 beim Aufsetzen des Helms 8 gegen den Kopf zur Anlage bringbar sind. Die Anlage gegen den Kopf erfolgt dabei unmittelbar über die mit Kühlmedium 4.1 versehende Außenlage 4.

### Bezugszeichenliste

- 1: Kopfschutzpolster
- 2: Grundkörper, Schaumstoff
- 3: Hülle
- 4: Außenlage
- 4.1 4.2: Kühlmedium Außenfläche
- 5: Innenlage
- 7: Abstandsschicht
- 7.1: Stäbchen, Härchen
- 8: Helmschale, Helm
- 8.1: Innenseite von 8
- L: Luftvolumen
- S: Volumen von 7.1
- V: Volumen
- α: Winkel

## Patentansprüche

1. Kopfschutzpolster (1) zum Einlegen in einen Helm (8) mit einem Grundkörper (2) aus Polstermaterial und eine Hülle (3), die den Grundkörper (2) zumindest teilweise umgibt,
wobei die Hülle (3) eine Außenlage (4) aus textilem Stoff und mindestens eine Innenlage (5) aufweist,
wobei eine Abstandsschicht (7) vorgesehen ist, die zwischen der Innenlage (5) und der Außenlage (4) angeordnet ist, **dadurch gekennzeichnet dass** die Außenlage (4) als Kühlschicht augebildet ist und ein in die Außenlage (4) integriertes Kuhlmedium (4.1) aufweist.

2. Kopfschutzpolster (1) nach Anspruch 1,
**dadurch gekennzeichnet,**
**dass** die Außenlage (4) und die Innenlage (5) aus textilem Stoff gebildet sind.

3. Kopfschutzpolster (1) nach Anspruch 1 oder 2,
**dadurch gekennzeichnet,**
**dass** als Kühlmedium (4.1) Paraffin vorgesehen ist, wobei das Paraffin in Form von Mikrokapseln in die Außenlage (4) integriert ist oder durch die Außenlage (4) aufgenommen ist.

4. Kopfschutzpolster (1) nach Anspruch 3,
**dadurch gekennzeichnet,**
**dass** die Abstandsschicht (7) unmittelbar an die Außenlage (4) angrenzt.

5. Kopfschutzpolster (1) nach einem der Ansprüche 3 bis 4,
**dadurch gekennzeichnet,**
**dass** die Abstandsschicht (7) mit der Außenlage (4) und/oder dass die Abstandsschicht (7) mit der Innenlage (4) verwebt ist.

6. Kopfschutzpolster (1) nach einem der Ansprüche 3 bis 5,
**dadurch gekennzeichnet,**
**dass** die Abstandsschicht (7) aus einer Vielzahl von parallel zueinander oder in einem spitzen Winkel α zueinander angeordneten Stäbchen (7.1) oder Härchen gebildet ist, die quer zur Außenlage (4) ausgerichtet sind.

7. Kopfschutzpolster (1) nach Anspruch 6,
**dadurch gekennzeichnet,**
**dass** eine Flächendichte von 2500 Stäbchen (7.1) pro cm², vorgesehen ist.

8. Kopfschutzpolster (1) nach einem der Ansprüche 3 bis 7,
**dadurch gekennzeichnet,**
**dass** die Abstandsschicht (7) eine Dicke von mindestens 5 mm aufweist.

9. Kopfschutzpolster (1) nach einem der Ansprüche 3 bis 8,
**dadurch gekennzeichnet,**
**dass** die Abstandsschicht (7) ein spezifisches Gewicht von 200 g/m² aufweist.

10. Kopfschutzpolster (1) nach einem der vorhergehenden Ansprüche,
**dadurch gekennzeichnet,**
**dass** der Grundkörper (2) aus Schaumstoff und/oder aus einem Gel gebildet ist.

11. System bestehend aus mindestens einem Kopfschutzpolster (1) nach einem der vorhergehenden Ansprüche und einer Helmschale (8), wobei das mindestens eine Kopfschutzpolster (1) auf einer Innenseite (8.1) der Helmschale (8) befestigt ist.

12. Verwendung eines Kopfschutzpolsters (1) nach einem der vorangegangenen Ansprüche in einer Helmschale (8) als Anlage für einen Kopf.

13. Verwendung eines Kopfschutzpolsters (1) nach einem der vorangegangenen Ansprüche für Stoßschutzwesten und Stoßschutzhosen als Anlage für die Arme oder die Beine oder den Torso.

## Claims

1. Head protection padding (1) for insertion into a helmet (8), comprising a base body (2) made of padding material and a cover (3) which at least partially surrounds the base body (2),
**characterized in that**
the cover (3) has an outer layer (4) made of textile fabric and at least one inner layer (5), wherein the outer layer (4) is designed as a cooling layer and has a cooling medium (4.1) integrated into the outer layer (4), wherein a spacer layer (7) is provided, which is arranged between the inner layer (5) and the outer layer (4).

2. Head protection padding (1) according to claim 1,
**characterized in that**
the outer layer (4) and the inner layer (5) are made of textile fabric.

3. Head protection padding (1) according to claim 1 or 2,
**characterized in that**
paraffin is provided as the cooling medium (4.1), wherein the paraffin is integrated into the outer layer (4) in the form of microcapsules or is absorbed by the outer layer (4).

4. Head protection padding (1) according to claim 3,
**characterized in that**
the spacer layer (7) is directly adjacent to the outer layer (4).

5. Head protection padding (1) according to one of claims 3 to 4,
**characterized in that**
the spacer layer (7) is interwoven with the outer layer (4) and/or **in that** the spacer layer (7) is interwoven with the inner layer (5).

6. Head protection padding (1) according to one of claims 3 to 5,
**characterized in that**
the spacer layer (7) is formed from a plurality of rods (7.1) or bristles arranged parallel to each other or at an acute angle α to each other, which are aligned transversely to the outer layer (4).

7. Head protection padding (1) according to claim 6,
**characterized in that**
a surface density of 2500 rods (7.1) per cm² is provided.

8. Head protection padding (1) according to one of claims 3 to 7,
**characterized in that**
the spacer layer (7) has a thickness of at least 5 mm.

9. Head protection padding (1) according to one of claims 3 to 8,
**characterized in that**
the spacer layer (7) has a specific weight of 200 g/m².

10. Head protection padding (1) according to one of the preceding claims,
**characterized in that**
the base body (2) is formed from foam and/or a gel.

11. System consisting of at least one head protection padding (1) according to one of the preceding claims and a helmet shell (8), wherein the at least one head protection pad (1) is attached to an inner side (8.1) of the helmet shell (8).

12. Use of a head protection pad (1) according to one of the preceding claims in a helmet shell (8) as a support for a head.

13. Use of a head protection pad (1) according to one of the preceding claims for impact protection vests and impact protection pants as a support for the arms or legs or torso.

## Revendications

1. Rembourrage de protection pour la tête (1) destiné à être inséré dans un casque (8), comprenant un corps de base (2) en matériau rembourré et une enveloppe (3) qui entoure au moins partiellement le corps de base (2),
**caractérisé en ce que**
la enveloppe (3) comporte une couche extérieure (4) d'en tissu textile et au moins une couche intérieure (5), la couche extérieure (4) étant conçue comme une couche de refroidissement et comportant un agent de refroidissement (4.1) intégré dans la couche extérieure (4) (4.1) intégré dans la couche extérieure (4), une couche d'écartement (7) étant prévue, qui est disposée entre la couche intérieure (5) et la couche extérieure (4).

2. Coussin de protection de la tête (1) selon la revendication 1,
**caractérisé en ce que**
la couche extérieure (4) et la couche intérieure (5) sont formées d'un tissu textile.

3. Coussin de protection pour la tête (1) selon la revendication 1 ou 2,
**caractérisé en ce**
**qu'**il est prévu comme agent réfrigérant (4.1) de la paraffine, la paraffine étant intégrée sous forme de microcapsules dans la couche extérieure (4) ou étant absorbée par la couche extérieure (4).

4. Coussin de protection pour la tête (1) selon la revendication 3,
**caractérisé en ce que**
la couche d'écartement (7) est directement adjacente à la couche extérieure (4).

5. Coussin de protection pour la tête (1) selon l'une des revendications 3 à 4,
**caractérisé en ce que**
la couche d'écartement (7) est tissée avec la couche extérieure (4) et/ou que la couche d'écartement (7) est tissée avec la couche intérieure (5).

6. Coussin de protection de la tête (1) selon l'une des revendications 3 à 5,
**caractérisé en ce que**
la couche d'écartement (7) est formée d'une multitude de tiges (7.1) ou de poils disposés parallèlement les uns aux autres ou selon un angle aigu α les uns par rapport aux autres, qui sont orientés transversalement par rapport à la couche extérieure (4).

7. Coussin de protection pour la tête (1) selon la revendication 6,
**caractérisé en ce**
**qu'**une densité surfacique de 2500 tiges (7.1) par cm² est prévue.

8. Coussin de protection pour la tête (1) selon l'une des revendications 3 à 7,
**caractérisé en ce que**
la couche d'écartement (7) présente une épaisseur d'au moins 5 mm.

9. Coussin de protection pour la tête (1) selon l'une des revendications 3 à 8,
**caractérisé en ce que**
la couche d'écartement (7) présente un poids spécifique de 200 g/m².

10. Coussin de protection (1) selon l'une des revendications précédentes,
**caractérisé en ce que**
le corps de base (2) est formé de mousse et/ou d'un gel.

11. Système composé d'au moins un coussin de protection pour la tête (1) selon l'une des revendications précédentes et d'une coque de casque (8), le au moins un rembourrage de protection pour la tête (1) étant fixé sur une face intérieure (8.1) de la coque de casque (8).

12. Utilisation d'un coussin de protection de la tête (1) selon l'une des revendications précédentes dans une coque de casque (8) comme appui pour la tête.

13. Utilisation d'un coussin de protection de la tête (1) selon l'une des revendications précédentes pour des gilets et des pantalons de protection contre les chocs comme appui pour les bras, les jambes ou le torse.
